# FASCICULE DE BREVET EUROPEEN

(11) **EP 3 564 056 B1**
(45) Date de publication et mention de la délivrance du brevet: **09.09.2020**
(21) Numéro de dépôt: 19171643.0
(22) Date de dépôt: 29.04.2019
(51) Int. Cl.: B60K 6/387, B60K 6/48, F16H 57/04, B60K 6/50

(54) **DISPOSITIF DE TRANSMISSION POUR VEHICULE AUTOMOBILE**
ANTRIEBSVORRICHTUNG FÜR KRAFTFAHRZEUG
TRANSMISSION DEVICE FOR MOTOR VEHICLE

(30) Priorité: 02.05.2018 FR 1853795
(43) Date de publication de la demande: 06.11.2019
(73) Titulaire: VALEO EMBRAYAGES, 80009 Amiens (FR)
(72) Inventeur: GUINOT, Thierry, 95892 CERGY PONTOISE (FR); LEBEAU, Fabien, 95892 CERGY PONTOISE (FR); CORNET, Vincent, 95892 CERGY PONTOISE (FR); DEQUESNES, Laurent, 95892 CERGY PONTOISE (FR); BARRY, Alain, 95892 CERGY PONTOISE (FR)
(74) Mandataire: Vincent, Catherine Marie Marguerite

(56) Documents cités:
- EP-A1- 2 517 915
- DE-A1-102009 059 944
- DE-C- 590 886
- FR-A1- 2 871 106
- US-A- 3 455 122

## Description

La présente invention se rapporte au domaine des transmissions pour véhicules automobiles. Elle se rapporte notamment à un dispositif de transmission de couple destiné à être disposé dans la chaine de traction d'un véhicule automobile, entre un moteur thermique et une boîte de vitesses.

L'invention concerne plus précisément un dispositif de transmission de couple pour un véhicule automobile de type hybride dans lequel une machine électrique tournante est disposée dans la chaine de traction.

Dans l'état de la technique, il est connu des ensembles de transmission, disposés entre la boîte de vitesses et le moteur thermique et comportant une machine électrique et un embrayage côté moteur permettant d'accoupler en rotation le vilebrequin du moteur thermique au rotor de la machine électrique. Ainsi, il est possible de couper le moteur thermique à chaque arrêt du véhicule et de le redémarrer grâce à la machine électrique. La machine électrique peut également constituer un frein électrique ou apporter un surplus d'énergie au moteur thermique pour l'assister ou éviter que celui-ci ne cale. La machine électrique peut également assurer l'entraînement du véhicule. Lorsque le moteur tourne, la machine électrique joue le rôle d'un alternateur. Un tel ensemble de transmission peut également lier la machine électrique à la boite de vitesses par deux chemins de couples distincts comprenant chacun un embrayage de sortie et un arbre d'entrée de boite de vitesses.

Il existe des dispositifs comprenant trois organes d'actionnement distincts pour l'actionnement des trois embrayages, un embrayage d'entrée entre le moteur à combustion interne et la machine électrique et deux embrayages de sortie entre le moteur électrique et les deux arbres d'entrée d'une boite de vitesses. Dans ces dispositifs, la machine électrique comprend un stator et un rotor entrainé en rotation autour d'un axe de rotation.

Le rotor dans ce type de moteur électrique est particulièrement lourd et il existe un besoin de disposer d'un dispositif permettant de guider la rotation de ce rotor.

Il existe également dans l'art antérieur tel que dans le document EP2517915, des dispositifs disposant d'une liaison mécanique particulièrement robuste entre le rotor, via le support de rotor, et le moyeu principal, permettant de guider la rotation du rotor de façon optimisée (sans à-coup et sans risque que les différentes pièces s'entrechoquent) et sans diminution de son efficacité dans le temps.

Cette liaison permet également la circulation d'un fluide, notamment de refroidissement, tel que de l'huile, adapté pour refroidir les embrayages, entre le support de rotor et le moyeu principal.

Cette solution ne donne cependant pas entièrement satisfaction. En effet, il existe un risque important de bavure lors du perçage des orifices d'arrivée de fluide dans la cannelure d'une part la nécessité de prévoir un détrompage afin de s'assurer que les conduites de passage de fluide opérées dans le moyeu central corresponde bien aux orifices opérés dans le support de rotor.

Le risque important de bavure entraine un risque de pollution du fluide qui peut provoquer par la suite des détériorations de l'embrayage. En effet, dans des embrayages de type humide, les papiers de friction peuvent être abimés facilement par de telles bavures.

La présente invention vise à remédier aux problèmes précités en bénéficiant d'un dispositif de transmission de couple permettant une circulation de fluide efficace et simplifiée. L'invention vise également à permettre de bénéficier d'un dispositif de transmission de couple possédant une durée de vie et une efficacité importantes.

L'invention y parvient, selon l'un de ses aspects, grâce à un dispositif de transmission de couple, notamment pour véhicule automobile, comprenant :
- un élément d'entrée de couple en rotation autour d'un axe X, apte à être couplé en rotation à un vilebrequin d'un moteur thermique,
- un premier élément de sortie de couple, apte à être couplé en rotation à un premier arbre d'entrée d'une boite de vitesses,
- une machine électrique tournante comprenant un stator et un rotor disposé au sens de la transmission de couple, entre l'élément d'entrée de couple et le premier élément de sortie,
- un moyeu principal comprenant une face supérieure composé d'une denture interne, ledit moyeu principal étant relié au premier élément de sortie par un premier embrayage de sortie,
- un support de rotor supportant radialement le rotor comprenant une face inférieure en regard du moyeu principal composée d'une denture externe, ledit support étant relié à l'élément d'entrée de couple par un embrayage d'entrée,
dans lequel lesdites dentures internes et externes forment ensemble une liaison cannelée et présentent chacune au moins un orifice pour le passage d'un fluide, l'au moins un orifice étant agencé intégralement sur une portion de surface délimitée par deux flancs consécutifs de chaque denture.

Cette configuration permet ainsi de limiter, voir d'éviter les problèmes de bavures en réalisant des orifices sur une partie « lisse » et non cannelée. En effet, les orifices étant agencés intégralement sur une portion de surface délimitée par deux flancs consécutifs de chaque denture, le perçage ne mord pas sur une dent ou une rainure, et s'en trouve ainsi facilité. En d'autres termes, les orifices se trouvent uniquement sur la portion de surface délimitée par deux flancs consécutifs et non sur un flanc par exemple.

De plus, pour pouvoir percer les orifices intégralement sur une portion de surface délimitée par deux flancs consécutifs de chaque denture, il a fallu supprimer plusieurs cannelures par endroits, ceci ayant pour résultat d'assurer un détrompage.

Enfin grâce à la liaison cannelée, le support de rotor est solidaire en rotation du moyeu principal.

Dans la suite de la description et les revendications, on utilisera à titre non limitatif et afin d'en faciliter la compréhension, les termes « avant » ou « arrière » selon la direction par rapport à une orientation axiale déterminée par l'axe X principal de rotation de la transmission du véhicule automobile et les termes « intérieur /interne / inférieure » ou « extérieur / externe / supérieure » par rapport à l'axe X et suivant une orientation radiale, orthogonale à ladite orientation axiale.

Selon un aspect de l'invention, le dispositif présente une pluralité d'orifices pour le passage du fluide répartis circonférentiellement autour de l'axe X ce qui permet d'assurer un refroidissement efficace et homogène. Selon l'invention, les orifices pour le passage du fluide de refroidissement sont équitablement répartis autour de l'axe X.

Selon un aspect de l'invention, l'au moins un orifice, c'est-à-dire l'orifice ou les orifices, est situé au droit de l'embrayage d'entrée.

Selon un autre aspect de l'invention, l'au moins un orifice, c'est-à-dire l'orifice ou les orifices, est orienté radialement.

Selon un autre aspect de l'invention, chaque orifice de la denture interne est situé en regard de chaque orifice de la denture externe.

Selon un autre aspect de l'invention, chaque orifice présente un diamètre compris entre 1.5 mm et 5mm.

Selon un autre aspect de l'invention, chaque orifice de la denture interne est situé sur une dent et chaque orifice de la denture externe est situé dans une rainure. En variante, chaque orifice de la denture interne est situé sur une rainure et chaque orifice de la denture externe est situé dans une dent.

Dans le cadre de la présente invention, on considère qu'une liaison cannelée est formé à partir d'une denture externe et d'une denture interne. Chaque denture étant composée d'une alternance de dents et de rainures. Comme cela est connu de l'homme du métier, chaque dent est séparée de chaque rainure par ce qu'on appelle un flanc. Ainsi, la portion de surface délimitée par deux flancs consécutifs correspond à la portion de surface d'une dent ou d'une rainure.

Selon un autre aspect de l'invention, les deux flancs consécutifs de chaque denture délimitant une portion de surface présentant un orifice sont espacés d'au moins 2.5. mm. En effet, les deux flancs doivent être suffisamment espacés pour que l'orifice puisse être percé intégralement sur cette portion de surface. Au sens de la présente invention, on comprend que par « espace entre deux flancs consécutifs délimitant une portion de surface présentant un orifice », on entend la distance séparant les arrêtes des deux flancs consécutifs formant la portion de surface présentant un orifice.

Selon un aspect de l'invention, la cannelure est une cannelure à flancs parallèles.

Selon un aspect de l'invention, la face inférieure du support de rotor comprend outre la denture externe, une deuxième partie, la deuxième partie étant en liaison pivot avec le moyeu principal. Une telle liaison mécanique permet de transmettre le couple entre l'embrayage d'entrée et les premier et deuxième embrayages de sortie sans perte de puissance. De plus, une telle liaison est démontable, permettant d'en assurer et d'en faciliter la maintenance.

L'addition de la liaison pivot, entre la deuxième partie de la face inférieure du support de rotor et le moyeu principal, avec la solidarisation en rotation, par la liaison cannelée du support de rotor avec le moyeu principal, permet d'obtenir une liaison encastrement entre le support de rotor et le moyeu principal. L'addition de ces deux liaisons permet de transmettre le couple entre ledit support de rotor et le moyeu principal tout en maintenant un lien robuste entre les deux éléments.

Selon un autre aspect de l'invention, la liaison pivot entre la deuxième partie de la face inférieure du support de rotor et le moyeu principal peut être une combinaison d'une liaison rotule et d'une liaison appui-plan. Cette combinaison de deux liaisons mécaniques permet de supprimer les mêmes degrés de liberté qu'une liaison pivot.

Selon un autre aspect de l'invention, la face supérieure du moyeu principal est au moins partiellement en regard avec la face inférieure du support de rotor. La face supérieure peut présenter un premier épaulement circonférentielle. Au sens de l'invention, circonférentielle signifie s'étendant circonférentiellement, autour de l'axe de rotation du rotor.

En outre, la face inférieure du support de rotor peut présenter un deuxième épaulement circonférentielle.

La liaison appui-plan entre le support de rotor et le moyeu principal peut être réalisée par un contact entre le premier épaulement et le deuxième épaulement. Ce contact permet de supprimer les mêmes degrés de liberté entre le support de rotor et le moyeu principal qu'une liaison appui-plan.

Selon un autre aspect de l'invention, le dispositif de transmission de couple peut en outre comprendre au moins un organe de fixation adapté pour maintenir la liaison appui-plan entre la deuxième partie de la face inférieure du support de rotor et le moyeu principal. Ce(s) organe(s) de fixation peuv(en)t être choisi(s) parmi des vis, des écrous ou des rivets réparties sur un pourtour de l'axe. Ce(s) organe(s) de fixation est (sont) disposé(s) radialement au même niveau que le moyeu principal. Ce(s) organe(s) de fixation permette(nt) de monter et/ou démonter facilement le dispositif. Cette facilité de démontage permet notamment de ne pas perdre l'ensemble des pièces constituant ledit dispositif en cas de défaillance de certaine d'entre elles.

Le moyeu principal permet un meilleur agencement des organes d'actionnement d'embrayages. En effet, un tel moyeu principal permet de s'extraire du besoin d'avoir plusieurs pièces distinctes pour l'agencement des organes d'actionnement. Le maintien radial est mutualisé pour les organes d'actionnement.

Selon un autre aspect de l'invention, le moyeu principal peut présenter un premier diamètre et comprendre une face supérieure au moins partiellement en regard avec la face inférieure du support de rotor, ladite face supérieure présentant une première longueur axiale.

En outre, le support de rotor peut présenter un deuxième diamètre et la face inférieure dudit support de rotor peut présenter une deuxième longueur axiale.

Selon un autre aspect de l'invention, la première longueur axiale peut être au moins deux fois supérieure à la deuxième longueur axiale. Plus particulièrement, la première longueur axiale peut être au moins trois fois supérieure à la deuxième longueur axiale.

Selon un autre aspect de l'invention, le premier diamètre peut être inférieur au deuxième diamètre. Cette différence entre le premier diamètre et le deuxième diamètre permet d'obtenir un jeu entre le moyeu principal et le support de rotor. C'est la différence de diamètre associée à la différence de longueur entre le moyeu principal et le support de rotor qui permet de supprimer les mêmes degrés de liberté qu'une liaison rotule.

Selon un autre aspect de l'invention, le dispositif de transmission de couple comprend un deuxième élément de sortie de couple, apte à être couplé en rotation à un deuxième arbre d'entrée d'une boîte de vitesses, un deuxième embrayage de sortie reliant le moyeu principal au deuxième élément de sortie de couple.

Selon un aspect de l'invention, les embrayages sont contenus dans au moins une chambre étanche. L'étanchéité de l'au moins une chambre dans laquelle sont disposés les embrayages est contrôlée au sein du dispositif et est indépendante de l'environnement final du dispositif.

En variante, seule une partie des embrayages peut être disposé dans la chambre étanche.

Selon un aspect de l'invention, les embrayages sont humides. La chambre étanche peut être remplie d'un fluide, notamment d'huile.

Au sens de la demande, un embrayage humide est un embrayage qui est adapté pour fonctionner dans un bain d'huile.

En variante, seuls les embrayages de sortie sont dans la chambre étanche. L'embrayage d'entrée est alors un embrayage sec disposé à l'extérieur de la chambre étanche.

En variante, seuls l'embrayage d'entrée est dans la chambre étanche. Les embrayages de sortie sont alors des embrayages secs disposés à l'extérieur de la chambre étanche.

Au sens de la présente demande, le premier embrayage de sortie est celui situé radialement à l'extérieur, c'est-à-dire le plus loin de l'axe de rotation X du dispositif. Le deuxième embrayage de sortie étant celui situé radialement à l'intérieur, c'est-à-dire le plus proche de l'axe de rotation du dispositif.

Selon un autre aspect de l'invention, le dispositif de transmission de couple peut en outre comprendre un élément intermédiaire de transmission de couple entre l'élément d'entrée et l'embrayage d'entrée. L'élément intermédiaire peut être centré et porté radialement par une cloison transversale. L'élément intermédiaire peut être centré et porté radialement au moyen d'un organe de roulement, notamment un roulement à aiguilles, disposé à la périphérie radialement inférieure de la cloison.

Un tel guidage par une pièce fixe permet de s'extraire d'un guidage par une pièce tournante (élément d'entrée, éléments de sortie) sujettes à des vibrations. Un tel guidage permet de guider au mieux le rotor de la machine électrique. Un tel guidage de l'élément intermédiaire permet également d'avoir un guidage à proximité de l'embrayage d'entrée qui lui garanti un bon positionnement. Ceci évite l'usure de l'embrayage d'entrée.

Selon un autre aspect de l'invention, la cloison transversale peut être située axialement entre l'embrayage d'entrée d'une part et le premier ou premier et deuxième embrayage de sortie d'autre part, La cloison peut être liée à l'élément intermédiaire d'une part et au support de rotor d'autre part.

Un moyen d'étanchéité peut être disposé entre l'extrémité radialement inférieure de la cloison et le support de rotor. Le moyen d'étanchéité est par exemple un joint à lèvre.

Selon un autre aspect de l'invention, le moyeu principal peut être porté radialement par un distributeur fixe au moyen d'au moins un organe de roulement, notamment un roulement à aiguilles. Un tel guidage du moyeu principal permet de lui garantir un bon positionnement. Ceci évite l'usure du moyeu principal.

Selon un autre aspect de l'invention, l'embrayage d'entrée est décalé des embrayages de sortie en éloignement de l'élément d'entrée. L'embrayage d'entrée est ainsi du côté de la boite de vitesses et les embrayages de sortie du coté du moteur à combustion interne. Les embrayages de sortie peuvent être axialement entre l'élément d'entrée et l'embrayage d'entrée. Il existe un plan perpendiculaire à l'axe de rotation qui laisse du côté de la boite de vitesses l'embrayage d'entrée et qui laisse du côté du moteur thermique les embrayages de sortie. Ce plan ne coupe aucun des trois embrayages. Un tel agencement permet d'obtenir un dispositif compact radialement.

Selon un autre aspect de l'invention, le support de rotor peut comprendre une paroi transversale, cette paroi étant d'un même côté axial que tous les embrayages. Cette paroi peut également être du même côté axial que les organes d'actionnement. Le support de rotor peut encapsuler à la fois les embrayages et les organes d'actionnement. Le support de rotor peut délimiter en partie la chambre étanche. La paroi est ainsi simple de fabrication et robuste.

De préférence, le support de rotor ne comporte par d'autre paroi transversale de sorte que le support de rotor est simple de construction.

Le support de rotor peut en outre comprendre une pièce de transfert. La pièce de transfert peut être située radialement sous, ou radialement interne à, l'embrayage d'entrée. La pièce de transfert peut être également située sous, ou radialement interne à, l'organe d'actionnement de l'embrayage d'entrée. La pièce de transfert est, pour le passage du couple, situé entre la paroi transversale et les premier et deuxième embrayages de sortie. La pièce de transfert du support de rotor peut délimiter en partie la chambre étanche.

La pièce de transfert et la paroi transversale peuvent être une pièce unique. Alternativement la pièce de transfert et la paroi transversale sont deux pièces distinctes. La pièce de transfert et la paroi transversale peuvent être soudées l'une à l'autre.

Selon un autre aspect de l'invention, chaque organe d'actionnement peut comprendre une chambre d'actionnement délimitée en partie par le moyeu principal et par un organe d'actionnement mobile axialement par rapport au moyeu principal et apte à coopérer avec l'embrayage associé. Chaque organe d'actionnement est mobile sous l'effet de la pression du fluide dans la chambre d'actionnement. Ces organes d'actionnement sont aussi appelés organes d'actionnement de type « piston ».

Associée à la chambre d'actionnement, chaque organe d'actionnement peut comprendre une chambre de compensation délimitée en partie par l'organe d'actionnement et par le moyeu principal. Cette chambre peut également être étanche.

L'organe d'actionnement peut former une barrière entre les deux chambres. La chambre de compensation est destinée à s'opposer aux effets liés à la pression d'huile hydrodynamique de la chambre d'actionnement sur l'organe d'actionnement. L'organe d'actionnement peut ainsi être déplacé axialement par variation de pression d'huile relative des chambres d'actionnement et de compensation.

Le support de rotor peut être assemblé avec le moyeu principal, par exemple par soudure. Plus particulièrement, la paroi transversale du support de rotor, directement ou via la pièce de transfert, peut être assemblée avec le moyeu principal, par exemple par soudure. En variante, le support de rotor et le moyeu principal peuvent être d'un seul tenant.

Le support de rotor peut également comporter un manchon externe cannelé qui coopère avec le rotor. Le manchon externe peut être d'un seul tenant avec la paroi transversale ou assemblés ensemble, notamment par soudure.

Selon un autre aspect de l'invention, le moyeu principal peut être porté radialement par un distributeur fixe, pouvant encore être appelé support d'embrayage. Le distributeur peut comporter un réseau fluidique pour l'approvisionnement de chacun des organes d'actionnement. Plus particulièrement, le réseau fluidique peut permettre l'approvisionnement de chacune des chambres d'actionnement et de chacune des chambres de compensation. Le distributeur permet avantageusement de n'avoir qu'une amenée de fluide pour l'ensemble des organes d'actionnement ce qui simplifie le dispositif. Le réseau fluidique est ménagé dans une pièce fixe en rotation dont la construction et le fonctionnement sont simplifiés par rapport à une amenée de fluide dans une pièce en rotation, par exemple un arbre de boite de vitesses. Un tel dispositif permet d'avoir une seule arrivée de fluide pour l'actionnement des embrayages ce qui simplifie la fabrication du dispositif.

Selon un aspect de l'invention, le moyen principal comprend au moins un conduit, et de préférence une pluralité de conduits, adapté pour relier le réseau fluidique aux différentes chambres d'actionnement et/ou de compensation.

Selon un aspect de l'invention, le réseau fluidique débouche du côté de la boite de vitesses. Le côté de la boite de vitesse est un environnement accessible par rapport au côté en regard du moteur à combustion interne qui est lui encombré et peu accessible.

Selon un aspect de l'invention, le rotor peut être porté radialement, notamment uniquement, par le distributeur. Des roulements, notamment des roulements à aiguilles, sont prévus entre le moyeu principal et le distributeur. De préférence deux roulements sont prévus, chacun étant positionné à l'une des extrémités axiale du moyeu principal. Les organes de roulement peuvent être sur une même hauteur radiale. La fonction de support radial des organes d'actionnement et du rotor est ainsi mutualisée.

Selon un aspect de l'invention, le réseau fluidique du distributeur peut comprendre, pour chaque chambre d'actionnement, une première série de canaux axiaux, au moins un canal et de préférence deux canaux, décalés circonférentiellement, qui débouchent sur une même gorge circonférentielle, ménagée elle aussi dans le distributeur, pour alimenter en fluide les chambres d'actionnement.

En regard de chaque gorge circonférentielle, des ouvertures sont prévues dans le moyeu principal pour le passage du fluide vers chacune des chambres d'actionnement.

Le réseau fluidique peut également comprendre une deuxième série de canaux axiaux, au moins un canal et de préférence deux canaux, décalés circonférentiellement, qui débouchent sur une même gorge circonférentielle pour le passage d'un fluide de refroidissement des embrayages.

Le réseau fluidique peut également comprendre, pour chaque organe d'actionnement, une troisième série de canaux axiaux, au moins un et de préférence deux, décalés circonférentiellement qui débouchent sur une même gorge circonférentielle pour alimenter en fluide chacune des chambres de compensation. Les fluides de refroidissement et de compensation peuvent être identiques.

Pour chaque embrayage, le réseau fluidique peut comprendre une unique série de canaux axiaux pour le refroidissement et l'approvisionnement en fluide de la chambre de compensation.

De préférence, le réseau fluidique peu comprendre une première unique série de canaux axiaux pour le refroidissement des embrayages de sortie et l'approvisionnement en fluide des chambres de compensation des embrayages de sortie et une deuxième unique série de canaux axiaux pour le refroidissement de l'embrayage d'entrée et l'approvisionnement en fluide de la chambre de compensation de l'embrayage d'entrée, différent de la première unique série.

Selon un aspect de l'invention, les chambres de compensation peuvent ne pas être alimentées en fluide.

Les séries de canaux axiaux peuvent être décalés circonférentiellement deux à deux.

Des bagues d'étanchéité, par exemple en plastique, peuvent être prévues de part et d'autre de chaque gorge circonférentielle.

Le distributeur présente ainsi une périphérie externe crantée formée par la succession des gorges circonférentielles.

Selon un aspect de l'invention, les organes de roulement du moyen principal peuvent encadrer les gorges circonférentielles.

Selon un autre aspect de l'invention, les organes d'actionnement peuvent se succéder axialement. Les organes d'actionnement sont tous laissés proches de l'axe de rotation, les embrayages peuvent être disposés dans l'espace entre le rotor et lesdits organes d'actionnement. L'approvisionnement en fluide des organes d'actionnement est également simplifié.

Selon un autre aspect de l'invention, les embrayages de sortie peuvent être empilés radialement pour minimiser l'espace axial alloué aux embrayages.

En variante, les embrayages de sortie peuvent également se succéder axialement. Il existe ainsi un axe parallèle à l'axe de rotation qui coupe chacun des embrayages. L'ensemble des embrayages peuvent se succéder axialement. Un tel agencement permet d'avoir un dispositif très compact radialement et d'utiliser au mieux l'espace intérieur de la machine électrique. Un tel agencement permet de prévoir des embrayages identiques et ainsi d'améliorer l'industrialisation du dispositif.

Selon un aspect de l'invention, l'élément d'entrée de couple est apte à être couplé en rotation à un vilebrequin du moteur thermique par l'intermédiaire d'un amortisseur de torsion.

Selon un autre aspect de l'invention, chacun des embrayages du dispositif peut comprendre :
- un porte-disque d'entrée solidaire en rotation de l'élément d'entrée de couple pour l'embrayage d'entrée, et solidaire en rotation du voile d'entrée pour le premier embrayage de sortie,
- un porte-disque de sortie solidaire en rotation du voile d'entrée pour l'embrayage d'entrée, et solidaire en rotation du premier élément de sortie pour le premier embrayage de sortie, et
- un ensemble multidisque comprenant au moins un disque de friction solidaire en rotation de l'un des porte-disque d'entrée et de sortie, au moins deux plateaux respectivement disposés de part et d'autre de chaque disque de friction, solidaires en rotation de l'autre des porte-disque d'entrée et de sortie et des garnitures de friction disposées entre les plateaux et un disque de friction, l'embrayage d'entrée et/ou le premier embrayage de sortie décrivant une position débrayée et une position embrayée dans laquelle lesdits plateaux et le disque de friction pincent les garnitures de friction de manière à transmettre un couple entre le porte-disque d'entrée et le porte-disque de sortie.

Selon un aspect de l'invention, l'ensemble des embrayages peuvent être portés par le support de rotor et/ou le moyeu principal de sorte qu'il n'est pas nécessaire de prévoir un guidage radial spécifique. Le distributeur fixe supporte le rotor, l'ensemble des organes d'actionnement et des embrayages.

Selon un autre aspect de l'invention, le dispositif peut être divisé en deux sous-ensembles indépendants :
- un premier sous-ensemble apte à être connecté au moteur à combustion interne comprenant l'élément d'entrée, les premier et deuxième embrayages de sortie et les organes d'actionnement associés, le moyeu principal et un premier carter apte à être fixé sur une partie fixe du moteur thermique, et
- un deuxième sous-ensemble apte à être connecté à la boite de vitesses comprenant la machine électrique, l'embrayage d'entrée et l'organe d'actionnement associé, le support de rotor et un deuxième carter apte à être fixée sur une partie fixe de la boite de vitesses.

Selon un autre aspect de l'invention, l'élément intermédiaire peut être partagé entre les deux sous-ensembles. L'élément intermédiaire peut comprendre une liaison interne cannelée pour le couplage en rotation des deux sous-ensembles.

Au sens de la demande, un sous-ensemble est un ensemble autonome de pièces qui se tiennent ensemble. Les sous-ensembles peuvent être manipulés séparément lors de l'assemblage.

Chaque sous-ensemble peut comprendre une partie fixe et une partie tournante.

Le deuxième carter peut être solidaire du distributeur fixe ou formé d'un seul tenant avec le distributeur.

Cette définition en sous-ensemble permet d'approvisionner indépendamment le premier sous-ensemble au fabricant du moteur thermique et le deuxième sous-ensemble au fabricant de la boite de vitesses.

Selon un autre aspect de l'invention, la machine électrique peut être une machine synchrone à aimants permanents. Une telle machine possède en grand diamètre favorable pour l'intégration des pièces du dispositif.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.
- la figure 1 est une vue en coupe axiale d'un exemple du dispositif selon l'invention, et
- la figure 2 est une vue isométrique partielle en coupe des deux sous-ensembles du dispositif avant leur assemblage.

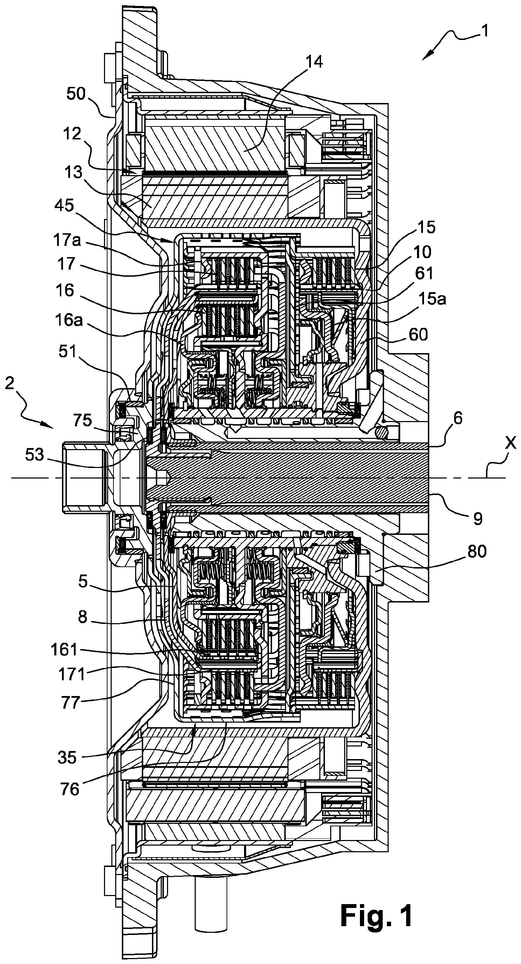

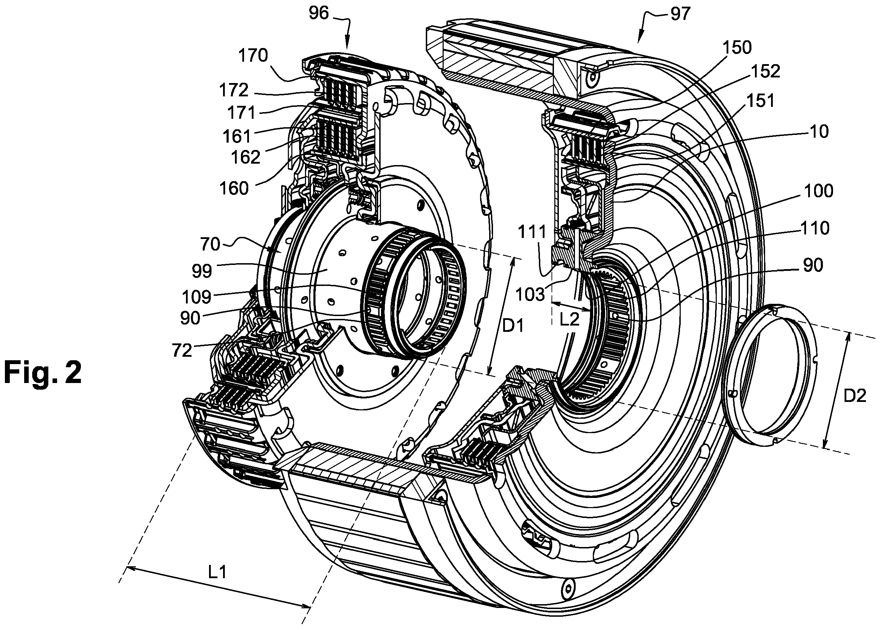

En relation avec les figures 1 et 2, on observe un dispositif de transmission de couple 1 comprenant :
- un élément d'entrée de couple 2, apte à être couplé en rotation à un vilebrequin d'un moteur à combustion interne,
- un premier élément de sortie de couple 5, apte à être couplé en rotation à un premier arbre d'entrée 6 d'une boîte de vitesses,
- un deuxième élément de sortie de couple 8, apte à être couplé en rotation à un deuxième arbre d'entrée 9 de la boîte de vitesses.

Dans les exemples considérés, le deuxième élément de sortie 8 est disposé en parallèle du premier élément de sortie 5 au sens de la transmission de couple. Chacun de ces éléments tournent autour d'un axe de rotation du dispositif X.

Le dispositif comprend également une machine électrique tournante 12 comprenant un rotor 13 et un stator 14. Le stator 14 est fixe, disposé autour du rotor 13. Le rotor 13 est disposé au sens de la transmission de couple, entre l'élément d'entrée 2 d'une part et le premier élément de sortie 5 et le deuxième élément de sortie 8 d'autre part. Le dispositif 1 comprend également un support de rotor 10 pour son maintien radial.

Dans les exemples considérés, le rotor 13 est relié sélectivement :
- à l'élément d'entrée 2 par un embrayage d'entrée 15 de type multidisque,
- au premier élément de sortie 5 par un premier embrayage de sortie 16 de type multidisque, et
- au deuxième élément de sortie 8 par un deuxième embrayage de sortie 17 de type multidisque.

Chacun des embrayages 15, 16, 17 a un organe d'actionnement associé 15a, 16a, 17a.

L'embrayage d'entrée 15 peut comprendre un porte-disques d'entrée 150 entrainé en rotation par un premier élément. Le premier élément peut être l'élément d'entrée 2.

L'embrayage d'entrée 15 peut en outre comprendre un porte-disques de sortie 151 solidaire en rotation d'un deuxième élément. Le deuxième élément peut être le support de rotor 10. Le support de rotor 10 peut être solidaire en rotation du porte-disques de sortie 151 via un élément de lien, par exemple un moyeu principal 70.

L'embrayage d'entrée 15 peut en outre comprendre un ensemble multidisque 152. L'ensemble multidisque 152 peut comprendre au moins un disque de friction solidaire en rotation de l'un des porte-disques d'entrée et de sortie. L'au moins un disque de friction est par exemple solidaire en rotation du porte-disques d'entrée 150. L'ensemble multidisque 152 peut en outre comprendre au moins deux plateaux respectivement disposés de part et d'autre de chaque disque de friction. Les plateaux peuvent être solidaires en rotation de l'autre des porte-disques d'entrée et de sortie. Les plateaux sont par exemple solidaires en rotation du porte-disque de sortie 151. L'ensemble multidisque 152 peut en outre comprendre des garnitures de friction disposées entre les plateaux et un disque de friction.

L'embrayage 15 peut décrire une position débrayée et une position embrayée dans laquelle lesdits plateaux et le disque de friction pincent les garnitures de friction de manière à transmettre un couple entre le porte-disques d'entrée 150 et le porte-disques de sortie 151.

L'organe d'actionnement 15a est mobile axialement entre une position de repos et une position active dans laquelle ledit organe d'actionnement 15a exerce un effort axial sur l'ensemble multidisque 152 pour amener l'embrayage d'entrée 15 en position embrayée.

Alternativement ou en complément, le premier embrayage de sortie 16 peut comprendre un porte-disques d'entrée 160 entrainé en rotation par un premier élément. Le premier élément peut être le support de rotor 10. Le support de rotor 10 peut entrainer en rotation le porte-disques d'entrée 160 via un élément de lien, par exemple un moyeu principal 70.

Le premier embrayage de sortie 16 peut en outre comprendre un porte-disques de sortie 161 solidaire en rotation d'un deuxième élément. Le deuxième élément peut être le premier élément de sortie.

Le premier embrayage de sortie 16 peut en outre comprendre un ensemble multidisque 162. L'ensemble multidisque 162 peut présenter les mêmes caractéristiques techniques que l'ensemble multidisque 152 de l'embrayage d'entrée 15.

Le premier embrayage de sortie 16 peut décrire une position débrayée et une position embrayée dans laquelle lesdits plateaux et le disque de friction pincent les garnitures de friction de manière à transmettre un couple entre le porte-disques d'entrée 160 et le porte-disques de sortie 161.

L'organe d'actionnement 16a du premier embrayage de sortie 16 peut présenter une partie ou l'ensemble des caractéristiques techniques de l'organe d'actionnement 15a de l'embrayage d'entrée 15.

Alternativement ou en complément, le deuxième embrayage de sortie 17 peut comprendre un porte-disques d'entrée 170 entrainé en rotation par un premier élément. Le premier élément peut être le support de rotor 10. Le support de rotor 10 peut entrainer en rotation le porte-disques d'entrée 170 via un élément de lien, par exemple le moyeu principal 70.

Le deuxième embrayage de sortie 17 peut en outre comprendre un porte-disques de sortie 171 solidaire en rotation d'un deuxième élément. Le deuxième élément peut être le deuxième élément de sortie.

Le deuxième embrayage de sortie 17 peut en outre comprendre un ensemble multidisque 172. L'ensemble multidisque 172 peut présenter les mêmes caractéristiques techniques que l'ensemble multidisque 152 de l'embrayage d'entrée 15 et/ou que l'ensemble multidisque 162 du premier embrayage de sortie 16.

Le deuxième embrayage de sortie 17 peut décrire une position débrayée et une position embrayée dans laquelle lesdits plateaux et le disque de friction pincent les garnitures de friction de manière à transmettre un couple entre le porte-disques d'entrée 170 et le porte-disques de sortie 171.

L'organe d'actionnement 17a du deuxième embrayage de sortie 17 peut présenter une partie ou l'ensemble des caractéristiques techniques de l'organe d'actionnement 15a de l'embrayage d'entrée 15 et/ou de l'organe d'actionnement 16a du premier embrayage de sortie 16.

Le premier arbre d'entrée 6 de la boîte est couplé en rotation au vilebrequin et est entraîné par lui en rotation lorsque le premier embrayage 15 et le premier embrayage de sortie 16 sont configurés dans une position dite embrayée. Dans cette configuration le rotor 13 peut également fournir un surplus d'énergie à la boite de vitesses.

Le premier arbre d'entrée 6 de la boite est couplé en rotation au rotor 13 et est entraîné par lui en rotation lorsque le premier embrayage 15 est configuré dans une position dite débrayée et le premier embrayage de sortie 16 est configuré dans la position embrayée. Le premier arbre de la boite est alors uniquement entrainé par le rotor. Dans cette configuration, la machine électrique peut aussi agir comme un frein et être dans un mode de récupération d'énergie.

De manière analogue, le deuxième arbre d'entrée 9 de la boite est couplé en rotation au vilebrequin et est entraîné par lui en rotation lorsque le premier embrayage 15 et le deuxième embrayage de sortie 17 sont configurés dans une position dite embrayée.

Le deuxième arbre d'entrée 9 de la boite est couplé en rotation au rotor 13 et est entraîné par lui en rotation lorsque le premier embrayage 15 est configuré dans une position dite débrayée et le deuxième embrayage de sortie 17 est configuré dans la position embrayée. Le deuxième arbre de la boite est alors uniquement entrainé par le rotor.

Lorsque les premier et deuxième embrayages de sortie 16, 17 sont en configuration débrayée et que l'embrayage d'entrée 15 est en configuration embrayée, le rotor 13 peut être entrainé par le moteur à combustion interne. Le moteur électrique est alors dans un mode de récupération d'énergie.

Dans l'exemple considéré aux figures 1 et 2, le premier embrayage de sortie 16 est, par exemple, agencé pour engager les rapports impairs de la boite de vitesses et le deuxième embrayage de sortie 17 est, par exemple, agencé pour engager les rapports pairs et la marche arrière de la boite de vitesses. Alternativement, les rapports pris en charge par lesdits premier embrayage de sortie 16 et deuxième embrayage de sortie 17 peuvent être respectivement inversés.

Les embrayages sont agencés pour transmettre alternativement une puissance dite d'entrée - un couple et une vitesse de rotation - du moteur à combustion interne, à l'un des deux arbres d'entrée de boite de vitesses, en fonction de la configuration respective de chaque embrayage de sortie 16, 17 et de l'embrayage d'entrée 15. Le dispositif est alors en mode dit « direct ». L'embrayage d'entrée 15 peut également transmettre un couple vers le moteur thermique, le dispositif est alors en mode dit « rétro ».

Les embrayages de sortie 16, 17 peuvent être agencés pour ne pas être simultanément dans la même configuration embrayée. En revanche, ils peuvent simultanément être configurés dans leur position débrayée.

Dans l'exemple considéré, le dispositif 1 comprend en outre un moyeu principal 70. Ledit moyeu principal 70 peut être relié sélectivement au premier élément de sortie 5 et au deuxième élément de sortie 8, respectivement, par le premier et deuxième embrayages de sortie 16, 17.

Dans l'exemple considéré, le support de rotor 10 comprend une face inférieure 100 en regard du moyeu principal 70. Ladite face inférieure 100 comprend une denture externe 110 que l'on considère comme une première partie et une deuxième partie 111. La deuxième partie 111 peut être en liaison pivot avec le moyeu principal 70.

La liaison pivot entre la deuxième partie 111 de la face inférieure 100 du support de rotor 10 et le moyeu principal 70 peut être une combinaison d'une liaison rotule et d'une liaison appui-plan.

Le moyeu principal 70 comprend une face supérieure 99 au moins partiellement en regard avec la face inférieure 100 du support de rotor 10. La face supérieure 99 peut présenter un premier épaulement 72. Le premier épaulement 72 peut s'étendre, par exemple de manière continue, circonférentiellement autour de l'axe de rotation X.

En outre, la face inférieure 100 du support de rotor 10 peut présenter un deuxième épaulement 103. Le deuxième épaulement 103 peut s'étendre, par exemple de manière continue, circonférentiellement autour de l'axe de rotation X. le deuxième épaulement 103 peut être plus particulièrement situé sur la deuxième partie 111 de la face inférieure 100.

La liaison appui-plan entre le support de rotor et le moyeu principal peut être réalisée par un contact entre le premier épaulement et le deuxième épaulement. Ce contact permet de supprimer les mêmes degrés de liberté entre le support de rotor et le moyeu principal qu'une liaison appui-plan.

Dans l'exemple considéré, le dispositif 1 de transmission de couple peut en outre comprendre au moins un organe de fixation adapté pour maintenir la liaison appui-plan entre la deuxième partie 111 de la face inférieure 100 du support de rotor 10 et le moyeu principal 70.

Ce(s) organe(s) de fixation peuv(en)t être choisi(s) parmi des vis, des écrous ou des rivets réparties sur un pourtour de l'axe de rotation X. Ce(s) organe(s) de fixation est(sont) disposé(s) radialement au même niveau que le moyeu principal 70. Ce(s) organe(s) de fixation permette(nt) de monter et/ou démonter facilement le dispositif 1.

Dans l'exemple considéré, le moyeu principal 70 peut présenter un premier diamètre D1 et la face supérieure 99 peut présenter une première longueur axiale L1.

Dans l'exemple considéré, le support de rotor 10 peut présenter un deuxième diamètre D2 et la face inférieure 100 dudit support de rotor 10 peut présenter une deuxième longueur axiale L2.

La première longueur axiale L1 peut être au moins deux fois supérieure à la deuxième longueur axiale L2. Plus particulièrement, la première longueur axiale L1 peut être au moins trois fois supérieure à la deuxième longueur axiale L2.

Le premier diamètre D1 peut être inférieur au deuxième diamètre D2. Cette différence entre le premier diamètre D1 et le deuxième diamètre D2 permet d'obtenir un jeu entre le moyeu principal 70 et le support de rotor 10. C'est la différence de diamètre associée à la différence de longueur entre le moyeu principal 70 et le support de rotor 10 qui permet d'obtenir une liaison rotule entre les deux éléments.

Dans l'exemple considéré, la denture interne 109 du moyeu principal 70 forme une liaison cannelée avec la denture externe 110 du support du rotor 10. Ainsi, le support de rotor 10 est solidaire en rotation du moyeu principal 70.

L'addition de la liaison pivot, entre la deuxième partie 111 de la face inférieure 100 du support de rotor 10 et le moyeu principal 70, avec la solidarisation en rotation, la denture interne 109 du moyeu principal 70 avec la denture externe 110 du support du rotor 10, permet d'obtenir une liaison encastrement entre le support de rotor 10 et le moyeu principal 70. L'addition de ces deux liaisons permet de transmettre le couple entre ledit support de rotor 10 et le moyeu principal 70 tout en maintenant un lien robuste entre les deux éléments.

Dans l'exemple considéré, le dispositif 1 présente une pluralité d'orifice 90 pour le passage de fluide répartis circonférentiellement autour de l'axe X. De manière avantageuse, les orifices 90 sont orientés radialement.

De manière avantageuse, chaque orifice de la denture interne 109 est situé en regard de chaque orifice de la denture externe 110.

De manière avantageuse que chaque orifice 90 présente un diamètre compris entre 1.5 mm et ...5 mm.

Dans l'exemple considéré, chaque orifice de la denture interne 109 est situé sur une dent et chaque orifice de la denture externe 110 est situé dans une rainure. En variante non représentée, chaque orifice de la denture interne 109 est situé dans une rainure et chaque orifice de la denture externe 110 est situé sur une dent.

Dans l'exemple considéré, la machine électrique 12 est une machine synchrone à aimants permanents.

Le dispositif 1 pourrait en outre comprendre un étage de ressorts (non représenté) entre l'élément d'entrée 2 et le rotor 12.

Dans l'exemple considéré, le dispositif 1 comprend également un élément intermédiaire 35 de transmission de couple entre l'élément d'entrée 2 et l'embrayage d'entrée 15.

Dans l'exemple considéré, le dispositif 1 peut définir une chambre étanche 45 remplie d'huile dans laquelle est disposé l'ensemble des embrayages. Les embrayages sont donc tous de type humide.

La chambre étanche 45 pourrait être délimitée en partie par le support de rotor 10 et par l'élément intermédiaire 35. Le dispositif 1 peut comprendre en outre une paroi fixe 50, par exemple solidaire du stator 14 et ainsi fixe en rotation. La paroi est par exemple vissée sur une partie solidaire du stator. La paroi 50 est sensiblement transversale.

Dans l'exemple considéré, l'élément intermédiaire 35 est centré sur la paroi fixe 50 au moyen d'un roulement à aiguilles 51 disposé à la périphérie radialement intérieure de la paroi fixe.

Un moyen de guidage en rotation ici, à nouveau un roulement à aiguilles 53, est prévu pour caler axialement l'élément intermédiaire 35 sur le deuxième élément de sortie 8. Le même moyen de guidage est prévu entre les deux éléments de sortie 5 et 8.

Dans l'exemple considéré, l'embrayage d'entrée 15 est décalé des embrayages de sortie 16, 17 en éloignement de l'élément d'entrée 2.

Dans l'exemple considéré, le support de rotor 10 peut comprendre une paroi transversale 60, cette paroi étant d'un même côté axial que tous les embrayages 15, 16, 17. Cette paroi transversale 60 peut également être du même côté axial que les organes d'actionnement. Le support de rotor 10 encapsule à la fois les embrayages et les organes d'actionnement.

Dans l'exemple considéré, l'élément intermédiaire 35 est également porté radialement par une cloison transversale 61. La cloison transversale 61 est en outre adaptée pour centrer l'élément intermédiaire 35. L'élément intermédiaire 35 peut être centré et porté radialement au moyen d'un organe de roulement, ici un roulement à aiguilles disposé entre une extrémité de la cloison transversale 61 et un rebord du support de rotor 10.

La cloison transversale 61 peut être située axialement entre l'embrayage d'entrée 15 d'une part et le premier embrayage de sortie 16 et le deuxième embrayage de sortie 17 d'autre part. La cloison transversale 61 peut être liée à l'élément intermédiaire 35 d'une part et au support de rotor 10 d'autre part.

La cloison transversale 61 peut être fixée, par exemple par soudage, ou uniquement entrainée en rotation par l'élément d'entrainement 35.

Pour d'avantage de détails concernant les embrayages 15, 16, 17 et les organes d'actionnement associés on pourra se rapporter à la demande de brevet français n° 1756978 déposée le 21 juillet 2017 au nom de Valeo Embrayages.

Dans l'exemple considéré, l'élément intermédiaire 35 comprend :
- un moyeu cannelé 75 pour le passage du couple entre l'intérieur et l'extérieur de la chambre étanche,
- une jupe cylindrique 76 pour l'entrainement de l'embrayage d'entrée 15,
- une portion de connexion 77 entre le moyeu cannelé et la jupe cylindrique.

La jupe cylindrique 76 s'étend radialement entre le rotor 13 et les embrayages de sortie 16, 17. Cette jupe cylindrique permet de transmettre le couple du côté du moteur thermique vers le côté de la boite de vitesses.

Dans l'exemple considéré, la portion de connexion 77 et la jupe cylindrique 76 sont d'un seul tenant relié en rotation au moyeu cannelé 77.

Dans l'exemple considéré, le distributeur fixe 80 qui porte le support de rotor 10, via le moyeu principal 70, est fixé sur une partie fixe de la boite de vitesses.

La figure 2 présente le dispositif 1 divisé en deux sous-ensembles indépendants :
- un premier sous-ensemble 96 apte à être connecté au moteur à combustion interne comprenant l'élément d'entrée 2, le premier embrayage de sortie 16 et le deuxième embrayage de sortie 17 et les organes d'actionnement 16a, 17a associés, le moyeu principal 70 et un premier carter apte à être fixé sur une partie fixe du moteur thermique, et
- un deuxième sous-ensemble 97 apte à être connecté à la boite de vitesses comprenant la machine électrique 12, l'embrayage d'entrée 15 et l'organe d'actionnement 15a associé, le support de rotor 10 et un deuxième carter 99 apte à être fixée sur une partie fixe de la boite de vitesses,

L'élément intermédiaire 35, partagé entre les deux sous-ensembles 98, 96, comporte une liaison interne cannelée pour le couplage en rotation des deux sous-ensembles.

Les sous-ensembles peuvent être manipulés séparément lors de l'assemblage.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Dans les revendications, tout signe de référence entre parenthèses ne saurait être interprété comme une limitation de la revendication.

## Revendications

1. Dispositif (1) de transmission de couple, notamment pour véhicule automobile, comprenant :
- un élément d'entrée de couple (2) en rotation autour d'un axe (X), apte à être couplé en rotation à un vilebrequin d'un moteur thermique,
- un premier élément de sortie de couple (5), apte à être couplé en rotation à un premier arbre d'entrée (6) d'une boite de vitesses,
- une machine électrique tournante (12) comprenant un stator (14) et un rotor (13) disposé au sens de la transmission de couple, entre l'élément d'entrée de couple (2) et le premier élément de sortie (5),
- un moyeu principal (70) comprenant une face supérieure (99) composé d'une denture interne (109), ledit moyeu principal étant relié au premier élément de sortie (5) par un premier embrayage de sortie (16),
- un support de rotor (10) supportant radialement le rotor (13) comprenant une face inférieure (100) en regard du moyeu principal (70) composée d'une denture externe (110), ledit support étant relié à l'élément d'entrée de couple (2) par un embrayage d'entrée (15),
**caractérisé en ce que** lesdites dentures interne (109) et externe (110) forment ensemble une liaison cannelée et présentent chacune au moins un orifice (90) pour le passage d'un fluide, l'au moins un orifice étant agencé intégralement sur une portion de surface délimitée par deux flancs consécutifs de chaque denture.

2. Dispositif (1) de transmission de couple selon la revendication 1, **caractérisé en ce qu'**il présente une pluralité d'orifices (90) pour le passage du fluide répartis circonférentiellement autour de l'axe (X).

3. Dispositif (1) de transmission de couple selon l'une quelconque des revendications précédentes, **caractérisé en ce que** l'au moins un orifice (90) est situé au droit de l'embrayage d'entrée (15).

4. Dispositif (1) de transmission de couple selon l'une quelconque des revendications précédentes, **caractérisé en ce que** l'au moins un orifice (90) est orienté radialement.

5. Dispositif (1) de transmission de couple selon l'une quelconque des revendications précédentes, **caractérisé en ce que** chaque orifice de la denture interne (109) est situé en regard de chaque orifice de la denture externe (110).

6. Dispositif (1) de transmission de couple selon l'une quelconque des revendications précédentes, **caractérisé en ce que** chaque orifice (90) présente un diamètre compris entre 1,5 mm et 5 mm.

7. Dispositif (1) de transmission de couple selon l'une quelconque des revendications précédentes, **caractérisé en ce que** chaque orifice de la denture interne (109) est situé sur une dent et chaque orifice de la denture externe (110) est situé dans une rainure.

8. Dispositif (1) de transmission de couple selon l'une quelconque des revendications précédentes, **caractérisé en ce que** les deux flancs consécutifs de chaque denture délimitant une portion de surface présentant un orifice sont espacés d'au moins 2,5 mm.

9. Dispositif (1) de transmission de couple selon l'une quelconque des revendications précédentes, **caractérisé en ce qu'**il comprend un deuxième élément de sortie de couple (8), apte à être couplé en rotation à un deuxième arbre d'entrée (9) d'une boîte de vitesses, un deuxième embrayage de sortie (17) reliant le moyeu principal (70) au deuxième élément de sortie de couple (8).

10. Dispositif (1) de transmission de couple selon l'une quelconque des revendications précédentes, **caractérisé en ce qu'**il comprend en outre un élément intermédiaire (35) de transmission de couple entre l'élément d'entrée de couple (2) et l'embrayage d'entrée (15), l'élément intermédiaire (35) étant centré et porté radialement par une cloison (61) transversale au moyen d'un organe de roulement, notamment un roulement à aiguilles, disposé à la périphérie radialement inférieure de la cloison.

11. Dispositif (1) selon la revendication précédente, dans lequel la cloison (61) transversale est située axialement entre l'embrayage d'entrée d'une part et le premier ou premier et deuxième embrayage de sortie (16, 17) d'autre part.

## Patentansprüche

1. Drehmomentübertragungsvorrichtung (1), insbesondere für ein Kraftfahrzeug, die enthält:
- ein Drehmomenteingangselement (2) in Drehung um eine Achse (X), das mit einer Kurbelwelle eines Wärmemotors drehgekoppelt werden kann,
- ein erstes Drehmomentausgangselement (5), das mit einer ersten Eingangswelle (6) eines Schaltgetriebes drehgekoppelt werden kann,
- eine rotierende elektrische Maschine (12), die einen Stator (14) und einen Rotor (13) enthält, der in Richtung der Drehmomentübertragung zwischen dem Drehmomenteingangselement (2) und dem ersten Ausgangselement (5) angeordnet ist,
- eine Hauptnabe (70) mit einer Oberseite (99), die aus einer inneren Verzahnung (109) besteht, wobei die Hauptnabe durch eine erste Ausgangskupplung (16) mit dem ersten Ausgangselement (5) verbunden ist,
- einen den Rotor (13) radial tragenden Rotorträger (10), der eine Unterseite (100) gegenüber der Hauptnabe (70) enthält, die aus einer äußeren Verzahnung (110) besteht, wobei der Träger durch eine Eingangskupplung (15) mit dem Drehmomenteingangselement (2) verbunden ist,
**dadurch gekennzeichnet, dass** die innere (109) und äußere Verzahnung (110) zusammen eine geriffelte Verbindung formen und je mindestens eine Öffnung (90) für den Durchgang eines Fluids aufweisen, wobei die mindestens eine Öffnung vollständig in einem Flächenabschnitt eingerichtet ist, der von zwei aufeinanderfolgenden Flanken jeder Verzahnung begrenzt wird.

2. Drehmomentübertragungsvorrichtung (1) nach Anspruch 1, **dadurch gekennzeichnet, dass** sie eine Vielzahl von Öffnungen (90) für den Durchgang des Fluids aufweist, die am Umfang um die Achse (X) verteilt sind.

3. Drehmomentübertragungsvorrichtung (1) nach einem der vorhergehenden Ansprüche, **dadurch gekennzeichnet, dass** die mindestens eine Öffnung (90) sich vor der Eingangskupplung (15) befindet.

4. Drehmomentübertragungsvorrichtung (1) nach einem der vorhergehenden Ansprüche, **dadurch gekennzeichnet, dass** die mindestens eine Öffnung (90) radial ausgerichtet ist.

5. Drehmomentübertragungsvorrichtung (1) nach einem der vorhergehenden Ansprüche, **dadurch gekennzeichnet, dass** jede Öffnung der inneren Verzahnung (109) sich gegenüber jeder Öffnung der äußeren Verzahnung (110) befindet.

6. Drehmomentübertragungsvorrichtung (1) nach einem der vorhergehenden Ansprüche, **dadurch gekennzeichnet, dass** jede Öffnung (90) einen Durchmesser zwischen 1,5 mm und 5 mm aufweist.

7. Drehmomentübertragungsvorrichtung (1) nach einem der vorhergehenden Ansprüche, **dadurch gekennzeichnet, dass** jede Öffnung der inneren Verzahnung (109) sich auf einem Zahn befindet, und jede Öffnung der äußeren Verzahnung (110) sich in einer Rille befindet.

8. Drehmomentübertragungsvorrichtung (1) nach einem der vorhergehenden Ansprüche, **dadurch gekennzeichnet, dass** die zwei aufeinanderfolgenden Flanken jeder Verzahnung, die einen eine Öffnung aufweisenden Flächenabschnitt begrenzen, einen Abstand von mindestens 2,5 mm haben.

9. Drehmomentübertragungsvorrichtung (1) nach einem der vorhergehenden Ansprüche, **dadurch gekennzeichnet, dass** sie ein zweites Drehmomentausgangselement (8) enthält, das mit einer zweiten Eingangswelle (9) eines Schaltgetriebes drehgekoppelt sein kann, wobei eine zweite Ausgangskupplung (17) die Hauptnabe (70) mit dem zweiten Drehmomentausgangselement (8) verbindet.

10. Drehmomentübertragungsvorrichtung (1) nach einem der vorhergehenden Ansprüche, **dadurch gekennzeichnet, dass** sie außerdem ein Drehmomentübertragungs-Zwischenelement (35) zwischen dem Drehmomenteingangselement (2) und der Eingangskupplung (15) enthält, wobei das Zwischenelement (35) zentriert ist und radial von einer Quertrennwand (61) mittels eines Wälzlagerorgans getragen wird, insbesondere eines Nadellagers, das am radial unteren Umfang der Trennwand angeordnet ist.

11. Vorrichtung (1) nach dem vorhergehenden Anspruch, wobei die Quertrennwand (61) sich axial zwischen der Eingangskupplung einerseits und der ersten oder ersten und zweiten Ausgangskupplung (16, 17) andererseits befindet.

## Claims

1. Torque transmission device (1), notably for a motor vehicle, comprising:
- a torque input element (2) rotating about an axis (X), that can be coupled in rotation to a crankshaft of a heat engine,
- a first torque output element (5), that can be coupled in rotation to a first input shaft (6) of a gearbox,
- a rotating electrical machine (12) comprising a stator (14) and a rotor (13) disposed, in the direction of torque transmission, between the torque input element (2) and the first output element (5),
- a main hub (70) comprising a top face (99) composed of an inner set of teeth (109), said main hub being liked to the first output element (5) by a first output clutch (16),
- a rotor support (10) radially supporting the rotor (13) comprising a bottom face (100) facing the main hub (70) composed of an outer set of teeth (110), said support being linked to the torque input element (2) by an input clutch (15),
**characterized in that** said inner (109) and outer (110) sets of teeth together form a splined link and each have at least one orifice (90) for the passage of a fluid, the at least one orifice being arranged entirely on a surface portion delimited by two consecutive flanks of each set of teeth.

2. Torque transmission device (1) according to Claim 1, **characterized in that** it has a plurality of orifices (90) for the passage of the fluid distributed circumferentially about the axis (X).

3. Torque transmission device (1) according to either one of the preceding claims, **characterized in that** the at least one orifice (90) is situated in line with the input clutch (15).

4. Torque transmission device (1) according to any one of the preceding claims, **characterized in that** the at least one orifice (90) is oriented radially.

5. Torque transmission device (1) according to any one of the preceding claims, **characterized in that** each orifice of the inner set of teeth (109) is situated facing each orifice of the outer set of teeth (110).

6. Torque transmission device (1) according to any one of the preceding claims, **characterized in that** each orifice (90) has a diameter of between 1.5 mm and 5 mm.

7. Torque transmission device (1) according to any one of the preceding claims, **characterized in that** each orifice of the inner set of teeth (109) is situated on a tooth and each orifice of the outer set of teeth (110) is situated in a groove.

8. Torque transmission device (1) according to any one of the preceding claims, **characterized in that** the two consecutive flanks of each set of teeth delimiting a surface portion having an orifice are spaced apart by at least 2.5 mm.

9. Torque transmission device (1) according to any one of the preceding claims, **characterized in that** it comprises a second torque output element (8), that can be coupled in rotation to a second input shaft (9) of a gearbox, a second output clutch (17) linking the main hub (70) to the second torque output element (8).

10. Torque transmission device (1) according to any one of the preceding claims, **characterized in that** it further comprises an intermediate torque transmission element (35) between the torque input element (2) and the input clutch (15), the intermediate element (35) being centred and borne radially by a transverse partition (61) by means of a rolling member, notably a needle bearing, disposed at the radially bottom periphery of the partition.

11. Device (1) according to the preceding claim, wherein the transverse partition (61) is situated axially between the input clutch on the one hand and the first or first and second output clutch (16, 17) on the other hand.
